# EUROPÄISCHE PATENTANMELDUNG

(11) **EP 0 626 589 A1**
(43) Veröffentlichungstag der Anmeldung: **30.11.1994**
(21) Anmeldenummer: 94105753.1
(22) Anmeldetag: 14.04.1994
(51) Int. Cl.: G01S 17/88

(54) **Verfahren zum Vermeiden einer Kollision eines Kraftfahrzeugs**

(30) Priorität: 28.05.1993 DE 4317960
(71) Anmelder: Bayerische Motoren Werke Aktiengesellschaft, 80788 München (DE)
(72) Erfinder: Waffler, Andreas, D-85579 Neubiberg (DE); Weishaupt, Walter, D-81247 München (DE); Siegl, Winfried, D-92339 Beilngries (DE)
(74) Vertreter: Bullwein, Fritz

(57) **Zusammenfassung**

Bei einem Verfahren zum Vermeiden einer Kollision eines Kraftfahrzeugs mit einem Hindernis, bei der das Ausgangssignal einer Abstands-Meßvorrichtung mit mehreren fächerförmig in- und seitlich zur Richtung der Bewegungsbahn des Kraftfahrzeugs ausgesandten Abtaststrahlen einer Auswerteeinheit zugeführt wird, wird ergänzend das Ausgangssignal eines Lenkwinkelgebers der Auswerteeinheit zugeführt. In der Auswerteeinheit wird die Bewegungsbahn des Kraftfahrzeugs berechnet und das Hindernis im Bezug auf die Bewegungsbahn des Kraftfahrzeugs bewertet. Das Hindernis wird nur dann berücksichtigt, wenn es in die Bewegungsbahn des Kraftfahrzeugs eintritt.

## Beschreibung

Die Erfindung bezieht sich auf ein Verfahren nach dem Oberbegriff des Patentanspruchs 1.

Bei der Abstands-Meßvorrichtung handelt es sich vorzugsweise um eine Vorrichtung auf Laserbasis, wie sie beispielsweise in der DE 40 28 788 A1 und DE 40 28 789 A1 beschrieben ist. Wesentlich dabei ist, daß der Untersuchungsbereich nicht nur die Bewegungsbahn allein, sondern auch die seitlich davon gelegenen Bereiche umfaßt.

Der Erfindung liegt die Aufgabe zugrunde, ein Verfahren der eingangs genannten Art zu schaffen, bei dem auf zuverlässige Weise auf die drohende Gefahr einer Kollision mit einem Hindernis hingewiesen wird, andererseits Fehlauslösungen weitgehend vermieden werden.

Die Erfindung löst diese Aufgabe durch die kennzeichnenden Merkmale des Patentanspruchs 1.

Wesentlich für die Erfindung ist die Bewertung der Hindernisse hinsichtlich der von ihnen ausgehenden Kollisionsgefahr. Es wird beispielsweise die Bewegungsbahn bzw. die Bewegung eines potentiellen Hindernisses im Bezug gesetzt zu der Bewegungsbahn des Kraftfahrzeugs und nur dann, wenn die Gefahr einer Kollision tatsächlich besteht, eine entsprechende Maßnahme ausgelöst. Dabei kann es sich sowohl um eine optische oder akustische Anzeige für den Kraftfahrzeugbenutzer oder aber auch um einen steuernden bzw. regelnden Einfluß auf das Fahrverhalten, beispielsweise durch Betätigen der Bremse oder Reduzieren der Motorleistung handeln.

Eine besonders vorteilhafte Ausgestaltung der Erfindung beschäftigt sich mit stehenden Hindernissen. Diese werden dann nicht berücksichtigt, wenn sie außerhalb der Bewegungsbahn des Kraftfahrzeugs liegen. Diese Ausführungsform der Erfindung zeichnet sich durch einen relativ geringen Rechenaufwand aus, da stehende Hindernisse in ihrem Bezug zu Bewegungsbahn des Kraftfahrzeugs mit geringem Aufwand kalkulierbar sind.

Die Erfindung ist anhand eines in der Zeichnung dargestellten Ausführungsbeispiels weiter erläutert. Es zeigt
- Fig.1: die Anwendung der Erfindung auf einen wesentlichen Betriebsfall und
- Fig.2: die Anwendung auf einen alternativen Betriebsfall.

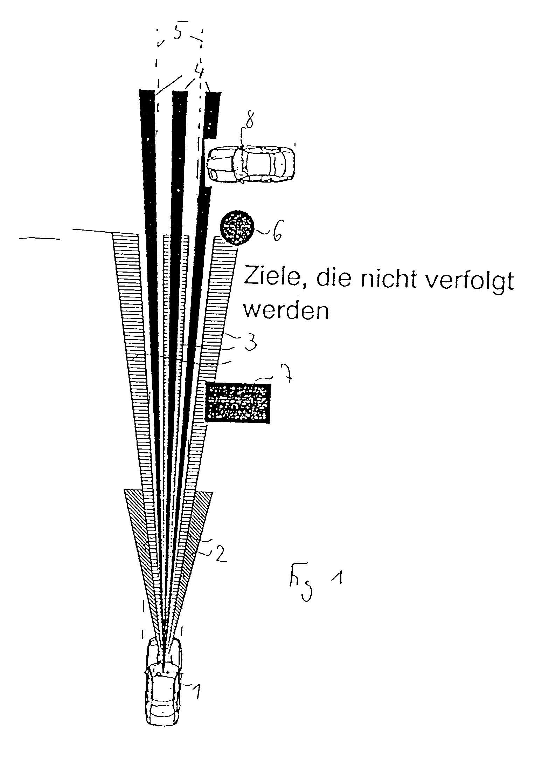

Beim Ausführungsbeispiel von Fig.1 ist schematisch ein Kraftfahrzeug 1 von oben dargestellt, das in Fahrtrichtung drei Tripel (2, 3 und 4) von Laser-Strahlen aussendet. Die Tripel sind in unterschiedliche Entfernungsbereiche gerichtet und besitzen einen mit zunehmender Entfernung des Untersuchungsbereichs abnehmenden Öffnungswinkel. Die aus den Untersuchungsbereichen reflektierten Lichtstrahlen werden in einer nicht dargestellten Auswerteeinheit des Kraftfahrzeugs ausgewertet und ein ggf. festgestelltes Hindernis hinsichtlich seiner Entfernung und Lage bezüglich der Bewegungsbahn des Kraftfahrzeugs bewertet.

Beim Ausführungsbeispiel von Fig.1 sei eine geradlinige Fahrt des Kraftfahrzeugs 1 angenommen. Die Auswerteeinheit geht dann von einer Bewegungsbahn des Kraftfahrzeugs 1 aus, die durch zwei strichliert eingezeichnete Linien 5 begrenzt ist.

Jedes der Strahl-Tripel 2 bis 4 richtet den Mittelstrahl in den Bereich der Bewegungsbahn, während die beiden Randstrahlen die Bewegungsbahn verlassen. Werden nun mit Hilfe der Randstrahlen Gegenstände erfaßt, die außerhalb der Bewegungsbahn des Kraftfahrzeugs 1 liegen, so werden diese hinsichtlich ihrer Bedeutung für das Kraftfahrzeug 1 bewertet. Dabei wird zusätzlich festgestellt, um welche Art von Gegenständen es sich handelt, d.h. welche Art von Bewegung sie bezüglich der Bewegungsbahn ausführen. Wird dabei erkannt, daß, wie hier angenommen, Hindernisse 6 und 7 stehen und außerhalb der Bewegungsbahn des Kraftfahrzeugs 1 liegen, so werden diese Hindernisse nicht als kritisch eingestuft und eine irgendwie geartete Warn- oder Anzeigemaßnahme nicht ausgelöst.

Bei einem weiteren Hindernis, das als Kraftfahrzeug 8 dargestellt ist, und das sich angenommen quer zur Bewegungsbahn des Kraftfahrzeugs 1 bewegt, wird ermittelt, welche Bedeutung dieses Hindernis für das Kraftfahrzeug 1 besitzt. Wird erkannt, daß sich das Kraftfahrzeug sowohl außerhalb der Bewegungsbahn des Kraftfahrzeugs 1 befindet als sich zusätzlich noch weiter von dieser Bewegungsbahn entfernt, so wird auch das Hindernis 8 unberücksichtigt gelassen. Ergibt sich jedoch, daß sich das Hindernis 8 in Richtung der Bewegungsbahn des Kraftfahrzeugs 1 bewegt, so wird bei entsprechender Annäherung an diese Bewegungsbahn ein entsprechendes Signal durch die Auswerteeinheit abgegeben und die angesprochene Warn- oder Signalisierungsmaßnahme veranlaßt.

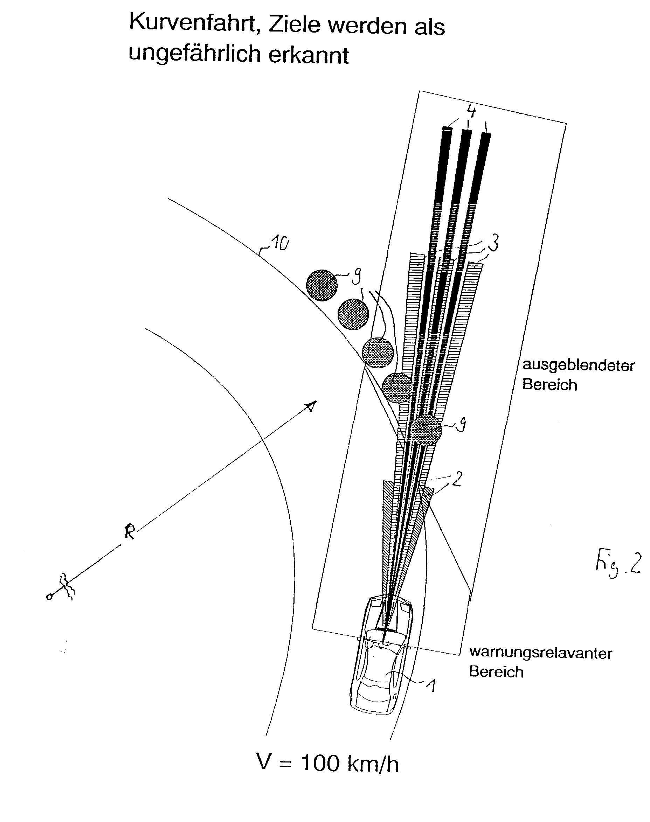

Entsprechend wird beim Ausführungsbeispiel von Fig.2 wiederum die Bewegungsbahn des Kraftfahrzeugs 1 in der Auswerteeinheit ermittelt. Im Gegensatz zum vorgehenden Ausführungsbeispiel ist nun eine Kurvenfahrt des Kraftfahrzeugs mit einem Kurvenradius R angenommen. Dieser ergibt sich mit Hilfe eines geeigneten, i.d.R. stets wirksamen Lenkwinkelgebers, bei dem es sich um einen körperlich vorhandenen Geber oder aber auch um eine nicht dargestellte Auswerteschaltung handelt, mit der aus den unterschiedlichen Drehzahlen der Vorderräder der Kurvenradius ermittelt wird.

Es seien hier stehende Hindernisse, beispielsweise Alleebäume 9 angenommen, die außerhalb der Bewegungsbahn mit der äußeren Grenze 10 des Kraftfahrzeugs 1 liegen. Auch hier werden stehende Hindernisse außerhalb der Bewegungsbahn des Kraftfahrzeugs nicht berücksichtigt.

Damit lassen sich Fehlwarnungen oder überflüssige Warnmaßnahmen auf ein unvermeidliches Mindestmaß reduzieren.

## Patentansprüche

1. Verfahren zum Vermeiden einer Kollision eines Kraftfahrzeugs mit einem Hindernis, bei dem das Ausgangssignal einer Abstands-Meßvorrichtung mit mehreren fächerförmig in und seitlich zur Richtung der Bewegungsbahn des Kraftfahrzeugs ausgesandten Abtaststrahlen einer Auswerteeinheit zugeführt wird, dadurch gekennzeichnet, daß ergänzend das Ausgangssignal eines Lenkwinkelgebers der Auswerteeinheit zugeführt wird, daß in der Auswerteeinheit die Bewegungsbahn (5; 10) des Kraftfahrzeugs (1) berechnet wird, daß das Hindernis (6, 7, 8, 9) in Bezug auf die Bewegungsbahn des Kraftfahrzeugs bewertet wird und daß das Hindernis nur dann berücksichtigt wird, wenn es in die Bewegungsbahn des Kraftfahrzeugs eintritt.

2. Verfahren nach Anspruch 1, dadurch gekennzeichnet, daß ein stehendes Hindernis dann nicht berücksichtigt wird, wenn es außerhalb der Bewegungsbahn des Kraftfahrzeugs liegt.
